# EUROPEAN PATENT APPLICATION

(11) **EP 1 014 631 A2**
(43) Date of publication of application: **28.06.2000**
(21) Application number: 99310211.0
(22) Date of filing: 17.12.1999
(51) Int. Cl.: H04L 12/58, H04M 3/533

(54) **Method and apparatus for retrieving messages**

(30) Priority: 21.12.1998 US 218267
(71) Applicant: NORTEL NETWORKS CORPORATION, Montreal, Quebec H2Y 3Y4 (CA)
(72) Inventor: Long, James R., Dallas, Texas 75252 (US); Jansen, Bernard, Brampton, ON L6R 1C5 (CA)
(74) Representative: Maury, Richard Philip

(57) **Abstract**

Systems and methods of retrieving one or more stored messages from a common message server onto a portable medium selectively attached to a terminal located remote from the common message server. Voice, text, facsimile and/or data messages may be transmitted to and stored on the common message server. The remote terminal reads information from the portable medium, which includes an address of the common message server and an account identifier. Subsequent to reading the information, the remote terminal contacts the common message server and logs on. Subsequent to the remote terminal logging on, the message server forwards any messages stored therein to the remote terminal. The remote terminal receives the messages and stores them on the portable medium. The remote terminal then disconnects from the common message server. The systems and methods could include a feature which assists a subscriber in making a determination not to retrieve messages before connection costs are incurred. This feature could be provided by an acknowledgment tone provided by the message server or a lack of an acknowledgment tone prior to the message server connecting the call.

## Description

### Field of the Invention

The invention relates generally to the field of messaging, and more particularly, to systems and methods for using public communications to retrieve messages, and store them on a portable medium.

### Background of the Invention

In the information age, information plays a vital role in the daily personal and business lives of many people. Because of this, people carry cellular or wireless phones, pagers etc. to make themselves more reachable. However, either by choice or by circumstance, most people are not directly reachable 24 hours a day, seven days a week.

Since people generally do not want to miss any important information, even when they are unreachable, they maintain voice mail boxes, electronic mail (e-mail) boxes, facsimile machines etc. As such, people are reachable through e-mail messages, facsimiles, voice-mail messages, etc., even when they are not reachable directly.

With the increasing amount of messages, people do not always have the time required to retrieve and review all of their messages. Further, a person's location may not be conducive to performing such tasks. For example, a person may be getting ready to board a plane, or a train, may be waiting for someone, may have any number of other things to do, etc. In such a situation, it would be convenient to have the ability to retrieve all or some of these messages without the need to immediately look at and/or listen to any of them and to store them locally for later more convenient review (e.g. after boarding the plane or train, etc.).

While it is currently possible to connect a portable computer to a public telephone and download e-mail messages and/or voice-mail messages, this is too time consuming since the computer must be removed from its storage location, booted, then connected to an e-mail provider so that any e-mail messages can be downloaded. Then, or alternatively, the person must load software which enables the computer to talk to a remote voice mail message server. After the software is loaded, the person must log on to the remote voice mail message server, download the messages, disconnect the computer from the telephone, unload the program, turn off the computer and return it to its storage place. By this time the person could have missed their plane, train, etc.

Accordingly there exists a need for systems and methods of retrieving electronic messages (i.e. voice, fax, and/or e-mail, etc.) and storing them locally and conveniently without the need to immediately review the messages.

There also exists a need for such systems and methods which are relatively quick to load and relatively small in size.

A need also exists for such systems and methods which can operate with a public communications device (i.e. public telephone).

A further need exists for such a system which requires minimal manual intervention.

### Summary of the Invention

The present invention solves these and other needs by retrieving at least one message from a common message server and storing the message(s) on a portable medium without the need to view or listen to the message(s). (These and other advantages of the invention will become apparent to those skilled in the art from the following description thereof.) The invention operates in a system where voice, text and/or data messages may be transmitted to and stored on a common message server.

An embodiment of the invention includes a portable medium for storing at least one message retrieved by a terminal from a message server. The portable medium includes a storage device selectively connectable to the terminal and a program stored on the storage device. The program includes information which enables the terminal to automatically contact the common message server for retrieving the at least one message and storing the at least one message on the storage device.

Another embodiment of the invention includes a method of retrieving one or more messages from a common server and storing them on a portable medium selectively connectable to a terminal. The terminal reads information from the portable medium which enables the terminal to contact the message server. Subsequent to reading the information, the terminal operates to contact the message server based upon the information. The terminal also operates to log on to the message server. The terminal then retrieives at least one message from the message server and stores the at least one message retrieved on the portable medium.

In another embodiment, the invention includes a method for enabling one or more messages stored on a common server to be retrieved by a terminal for storage on a portable medium. The message server receives an incoming call indicated by at least two rings separated by a silent period. The message server receives an account identifier during the silent period and detects the account identifier. It determines if at least one message is stored in an account identified by the account identifier, and subsequent to the determination, transmits an acknowledgment tone for receipt by the terminal.

In another embodiment of the invention the terminal reads information from the portable medium and subsequent thereto operates to contact the message server based upon said information. The terminal transmits an account identifier between two consecutive rings, for receipt by the message server. The terminal receives an indication about a set of messages stored on the message server and ends the retrieving subsequent to receiving the indication.

Yet another embodiment of the invention includes a terminal for retrieving one or more messages from a message server and storing the one or more messages onto a portable medium. The terminal includes a receiving module for receiving the portable medium, reading information stored thereon and attempting to contact the message server. It also includes a processor module coupled to the receiving module which operates to retrieve the one or more messages from the message server and store the one or messages on the portable medium.

Another embodiment of the invention includes a system for a terminal to retrieve one or more messages from a message server and store the one or more retrieved messages onto a portable medium. The system includes a terminal selectively coupled to the common message server, a drive coupled to the terminal, and a modem coupled to the terminal. The portable medium is selectively loadable into the drive and contains information. The terminal includes a processor coupled thereto which is capable of reading the information from the portable medium. Based upon the information read, the processor is capable of directing the terminal to connect to the common message server, retrieve at least one message therefrom and store the at least one retrieved message on the portable medium.

Still another embodiment of the invention includes a pay terminal including a telephone, a drive and a pay mechanism. Wherein the drive is either a disk drive (e.g. DVD, CD, floppy, etc.) or a wireless port (e.g. IR or RF). The drive and pay mechanisms may be integral with the telephone or adjuncts thereto.

The invention will now be described in connection with certain exemplary embodiments; however, it should be clear to those skilled in the art that various modifications, additions and subtractions can be made without departing from the spirit or scope of the invention and the claims herein.

### Brief Description of the Drawings

The invention will be more clearly understood by reference to the following detailed description of an exemplary embodiment in conjunction with the accompanying drawings, in which:

FIG. 1 depicts a block diagram of a system in accordance with the present invention.

FIG. 2 depicts a flow chart illustrating operation of an embodiment of the invention depicted in FIG. 1

### Detailed Description of the Invention

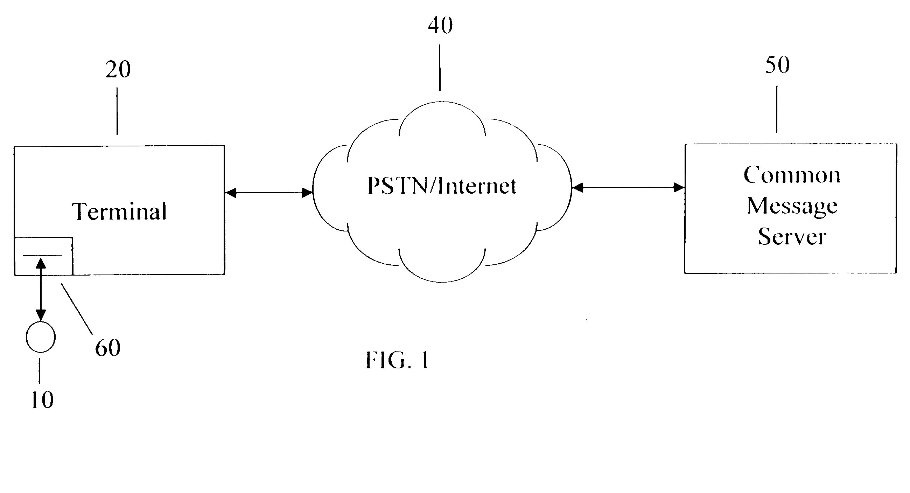

The messaging system illustrated in Figure 1 is a block diagram of a system in accordance with the present invention. The system enables a subscriber to the system to insert/attach a portable medium 10 into/onto a terminal 20 and retrieve one or more messages stored on a common message server 50 via a network 40.

The portable medium 10 may be a floppy disc, a writeable compact disc (CD), a digital video disc (DVD), a flash ROM, a PCMCIA card, a smart card (if improvements in technology improve the amount of storage available), or any other device which is relatively small, relatively cheap and includes sufficient storage for the message format desired. Preferably the portable medium 10 is a DVD since most new computers include DVD drives, and DVDs are small, relatively cheap to produce, are relatively durable, and have a relatively large storage capacity. However, it is conceivable that a system according to the present invention will provide a choice to the subscriber of which type of portable medium 10 to employ. For ease of description, only DVDs will be referenced herein; however, any reference thereto is intended to be a generic reference to any of the portable mediums 10.

The DVD 10 could include a self executing program (as do many conventional CDS and DVDs) which includes the address(es) (e.g. telephone number, network address, Internet address, etc.) of one or more common server(s) 50 and one or more account identifier(s). Those skilled in the art will also recognize that the program could be configured to require user intervention to start (e.g. performing a function such as pushing one or more buttons on the terminal 20). The self executing program could also require the subscriber to enter a password to prevent lost or stolen DVDs 10 from being used; although a password is not required. The portable medium could also include a password which allows the subscriber to use the terminal 20.

In the event the program includes the addresses of multiple servers 50, the program (i) could provide the subscriber with the option of choosing which server 50 to contact; (ii) could contact each of the servers 50 in a predetermined sequence; or (iii) could be preprogrammed to contact some of the servers 50 and then query the subscriber whether to contact the other servers 50. Further, in the event the program includes multiple addresses for the common server 50 (e.g. message server 50 includes multiple servers each with a different address), the program (i) could provide the subscriber with the option of choosing which of the servers making up common server 50 to contact; (ii) could contact each of the servers making up message server 50 in a predetermined sequence; or (iii) could be preprogrammed to contact some of the servers making up sever 50 and then query the subscriber whether to contact the other servers. The addresses provided by the program could be telephone numbers, Internet addresses, addresses on a managed network, or combinations thereof.

The terminal 20 may be a public, semi-public (e.g. office or business) or private terminal such as a telephone or computer. For ease of description, the remainder of the specification will only reference a public telephone 20. however, the discussions will also be relevant to private and semi-private telephones 20 and computers 20. The public telephone 20 may be a pay telephone having a pay mechanism, such as a card reader (e.g. a credit card, smart card, etc. reader), coin slots, a bill receptacle, etc. or any other conventional or future payment mechanism. The public telephone 20 may include a port or a drive 60 which is capable of receiving a portable medium 10. The port/drive 60 could be a DVD drive, a CD drive (it is recognized that DVD drives also read CDS), a floppy disk drive, a PCMCIA slot, a universal service bus (USB) slot etc. The telephone 20 could also include multiple ports/slots 60 to accommodate different types of portable media 10. The port/slot 60 could be integrated with the telephone or they could be adjuncts thereto. Further, the ports could require a physical connection to the portable medium such as one or more wires, inserting the portable medium into the terminal, etc., or they could be configured for wireless connections (e.g. Infra Red communications, Radio Frequency communications, etc.). For ease of explanation, only drives 60 will be referenced herein. However, this term is intended as a generic term to describe disk drives, ports etc., unless the term is specifically modified to refer to a particular type of drive (e.g. disk drive may only refer to a DVD, CD or floppy disk drive, etc.) The telephone 20 may include a microprocessor or a cheaper, less powerful processor (e.g. an application specific integrated circuit (ASIC), etc ) for obtaining the information from the portable medium 10 and directing the telephone 20 to contact the message server 50. The processor may also direct any signaling between the telephone 20 and the message server 50. Additionally, the processor may direct the telephone 20 to disconnect in the event the message server signals that there are no new messages, or in the event the terminal does not receive a required signal within a predetermined period (e.g. number of rings or timed).

The common message server 50 may be a conventional e-mail server, PBX, facsimile server, a server which stores multiple message formats (e.g. e-mail messages, voice messages, facsimiles, etc.) or a combination of two or more of these servers. While the specification will discuss a common message server 50 or a message server 50, those skilled in the art will recognize that the invention is equally applicable to a server 50 which only receives and stores one message format. Accordingly, every reference to a message server 50 or a common message server 50 is a generic reference to (i) a message server 50 which only stores one message format, (ii) a message server which stores multiple message formats, or (iii) a group of two or more message servers each of which stores one or more message formats. Each of these servers may include modifications which will be discussed herein. U.S. Patent No. 5,737,395 to Irrabarren entitled System and Method for Integrating Voice, Facsimile and Electronic Mail Data Through a Personal Computer, which issued on April 7, 1998 and U.S. Patent No. 4,837,798 to Cohen et al. entitled Communication System Having Unified Messaging, which issued June 6, 1989 disclose systems which could be employed as the common message server 50 and are accordingly incorporated herein by reference.

The network 40 may be the Public Switched Telephone Network (PSTN), the Internet, a managed network (e.g. a managed IP network), etc., or a combination of these.

The system may include a feature which enables the subscriber to determine if any messages are waiting without incurring any connection charges. As such, the common server 50 may include detection circuitry which enables the common server 50 to detect a ring signal, to detect signals sent to the common server in the silent period between ring signals and to determine if an account, identified by the signal detected between ring cycles, has any messages stored therein. The detection circuitry may also be employed to cause the common server to go off-hook (e.g. answer the call if it is received via the PSTN 40) if it detects that there are any messages, a predetermined number of messages, or a number of messages which falls within a specified range (e.g. 1-5, 2-8 etc.). It could also be configured to go off-hook only if at least one of the stored messages was stored after a previous attempt to access the account. This determination could be made by setting and checking a flag or a counter. The common server could also include a signal generator configured to transmit a signal over the line in response to a selected finding by the detection circuit (e.g the signal generator could be configured to generate a signal in response to no messages, to no new messages, to a particular number of new messages, to a particular type of messages, etc.). The message server 50 could also be configured to disconnect the call if it determines that (i) there are no messages, (ii) there are no new messages, (iii) a specified number of messages are not stored, (iv) the number of messages stored is not within a specified range, etc.

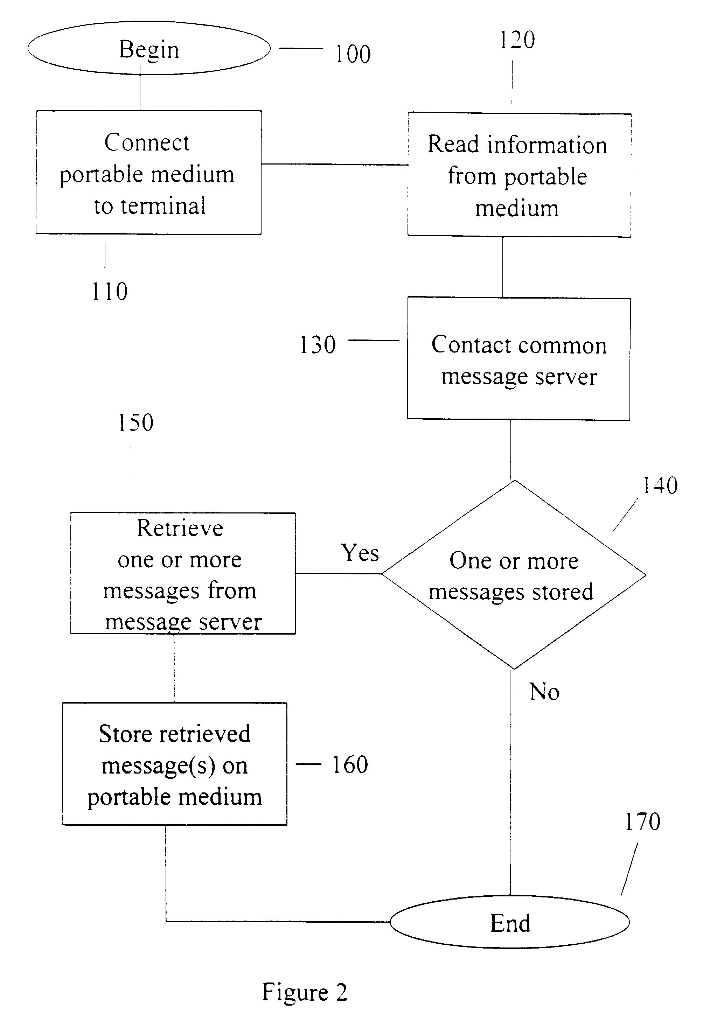

The following description will explain an embodiment of the system in operation as illustrated in Figure 2. The embodiment described will utilize a common server 50 which stores text messages, voice messages and data messages, a telephone 20 which includes a DVD drive 60, and a DVD 10. It will be apparent to those skilled in the art that other system configurations disclosed herein will operate in a similar manner with no changes or minor changes.

In operation, a subscriber is provided with a DVD 10 which can be (i) preloaded with information provided by the subscriber to the service provider, (ii) preloaded with information provided by the service provider, (iii) be loaded on a personal computer and configured by the subscriber, or (iv) some combination thereof. The information could include subscriber identification, passwords, server addresses, account identification, subscriber preferences (e.g. which servers to access, in what order, etc) and/or other data. Further, some or all of the information could be stored on a central directory lookup server (not shown). In such a configuration, the information stored on the DVD 10 could include subscriber identification, passwords, a lookup server address, lookup server account identification, and/or other data which enables the terminal to access the lookup server and then access the common message server. The account identification for the common message server could include one or more database address(es), memory address(es), voice mail extension(s), etc. The DVD 10 could also include payment information, similar to a conventional phone card, debit card, credit card, etc. The subscriber could also be given the option of receiving a receipt at the end of the transaction.

When the subscriber wants to retrieve messages without reviewing them the subscriber can load the DVD 10 into the DVD drive 60 (step 110) attached to the telephone 20. Either before or after loading the DVD 10, the subscriber could be given an option for payment such as pay as you go, entering a credit card number, a phone card, the payment information could be automatic and included on the DVD, etc. Further, depending upon the design choices, the system could be configured to charge a subscriber based upon connection time, bandwidth ussage, message size, number of messages retrieved, etc.

Once the DVD 10 is loaded, a self executing program can run which instructs the telephone 20 how to contact the common message server 50 (e.g via a telephone, a computer network, etc., and/or a combination thereof) (step 120). It is possible (but not required) that the program requires the subscriber to enter a password to continue. If so, the subscriber enters the password through the telephone keypad, keyboard, touch screen, or other input device (keypad) or the password could be stored on the DVD 10 for subscribers who do not care to be bothered entering passwords. The program could request this password either via a display on the telephone or through an announcement over the speaker of the telephone. It is also possible that the terminal requires a password. This password could be included on the portable medium 10 or it could be entered by the subscriber. In addition to the server address, the self executing program also provides the telephone with an identification number which identifies the subscriber's account on the common server 50. At this point the telephone 20 contacts (i.e. dials) the message server (step 130).

Assuming that the message server 50 answers the call, or that the telephone connects to the message server 50 via a computer network 40 such as the Internet, the message server could require a password to access the account (although not required). This password could be included on the DVD 10 or it could be entered by the subscriber on the telephone keypad. Once the telephone 20 is logged on to the message server 50 (either with or without entering a password), the telephone could instruct the message server 50 to transfer or copy all or some of the messages to the telephone 20 (step 150). This process could also be automatic by the message server 50 or the subscriber could be given the option of retrieving all or some of the messages (copies or originals), erasing the messages, forwarding the messages to another location, etc. The transferred messages or copies of the messages received by the telephone are then stored on the DVD 10 (step 160). It should be noted that, while not required, either the telephone 20 or the common server 50 could convert all the messages into a single format (e.g. text, HTML, graphics, video, audio, etc.). If the common server provides this service, it can convert the messages prior to storage or prior to transmitting the messages to the telephone 20.

Once the transfer of messages is complete, either the message server 50 or the telephone 20 could disconnect the call (step 170). The choice could also be provided to the subscriber. Once the call is disconnected, the DVD may be removed from the DVD drive 60. Those skilled in the art will recognize that it may be possible to remove the DVD 10 prior to disconnecting the call. The messages stored on the DVD can then be easily transported for review at a later time in the same or a different device.

If the telephone 20 attempts to contact the message server 50 via the PSTN, it is possible, but not required that the system is configured with a feature which enables the subscriber to determine that message retrieval is unwarranted, without incurring connection costs. It is also possible that the system is configured to make this feature an option that can be turned off or on by the subscriber.

In a configuration with the connection charge saving feature (turned on if optional), the telephone 20 sends the identification number to the message server during the quiet period between the first and second rings. Those skilled in the art will recognize that it is also possible to configure the system to send the identification information between two consecutive ring signals other than the first two. The common message server detects the identification information, determines which account the telephone is attempting to access and determines if any messages are stored in the account. This determination could be a yes or no (true/false), or a determination of an actual number of messages stored. The message server could also determine, if there are messages stored, whether the messages were stored after the last attempt to access the account. Depending upon the design choices made, the message server 50 could then, either answer the call (eg. go off-hook), or send an acknowledgment tone back to the telephone 20 indicating the presence of stored messages which should be retrieved. Also depending upon design choices, the acknowledgment tone could indicate that there are messages stored, that there are no messages stored, that there are no new messages stored, that there are new messages stored, and/or that there are certain types of message stored (e.g. the signal could indicate only voice messages, or only text messages or both voice and text messages but not facsimiles, etc.). It could also indicate the number of messages stored (i.e. it could indicate no messages stored, an actual number of messages stored, a number of new messages stored, that the number of new messages stored falls within a predetermined range or that the number of messages stored falls within a predetermined range(e.g. between 5 and 10, 10 and 20, 3 and 7, etc.)).

If the design choice is that the signal indicates no messages stored, no new messages stored, the number of messages stored does not fall within a predetermined range, or the number of new messages stored does not fall within a predetermined range, then the telephone 20 could disconnect the call after receiving the signal. If, however, the design choice is that the signal indicates one or more messages stored (e.g. a hand shaking requirement), one or more new messages stored, a range of the number of messages stored is within a predetermined range, or the number of new messages stored is within a predetermined range, the telephone could be configured to disconnect the call if it does not receive the expected signal within a predetermined number of rings or within a predetermined period of time. Further, if the signal indicates a type of message, that no messages are stored, or that the number of messages stored does not meet a predetermined requirement, the telephone could give the subscriber the option of disconnecting or continuing the call. When the call is disconnected prior to retrieving one or more messages, the subscriber could be provided with a message stating that no messages were received or that the number of messages stored do not meet the preset requirements and could be given the option to retry.

It will thus be seen that the invention efficiently meets the needs set forth above. In particular, the invention provides apparatus and methods for retrieving messages and storing them on a portable medium. Those skilled in the art will appreciate that the configurations depicted in figures 1 and 2 allow a subscriber to retrieve messages without previewing them and store them on a portable medium for later perusal.

It will be understood that changes may be made in the above construction and in the foregoing sequences of operation without departing from the scope of the invention. It is accordingly intended that all matter contained in the above description or shown in the accompanying drawings be interpreted as illustrative rather than in a limiting sense.

It is also to be understood that the following claims are intended to cover the generic and specific features of the invention as described herein, and statements of the scope of the invention which, as a matter of language, might be said to fall therebetween

Having described the invention, what is claimed as new and secured by Letters Patent is:

## Claims

1. A portable medium for storing at least one message retrieved by a terminal from a message server, comprising:
a storage device selectively coupleable to said terminal; and
a program stored on said storage device; wherein said program includes information which enables said terminal to automatically contact said message server for retrieving said at least one message and storing said at least one message on said storage device.

2. The portable medium according to Claim 1 wherein:
said program is self executing.

3. The portable medium according to Claim 1 wherein:
said information includes:
an address of said message server; and
an identification of an account on said message server.

4. The portable medium according to Claim 1 wherein:
said information includes:
an address of a central lookup server; and
an identification of an account on said lookup server;
wherein said account on said lookup server includes:
an address of said message server; and
an identification of an account on said message server.

5. A method of retrieving one or more messages from a common server and storing them on a portable medium selectively coupleable to a terminal, comprising:
said terminal reading information from said portable medium; wherein said information enables said terminal to contact said message server;
subsequent to said reading, said terminal operates to contact and log on to said message server based upon said information; and
said terminal receives at least one message from said common message server and stores said at least one message received on said portable medium.

6. The method of retrieving messages according to Claim 5 further comprising:
subsequent to said operating to log on to said message server, said terminal transmitting an instruction for receipt by said message server for said message server to forward said at least one message to said terminal.

7. The method of retrieving messages according to Claim 5 wherein:
said information includes an address of said message server and an account identifier;
said terminal is remote from said message server and,
said method further includes:
said remote terminal transmitting said account identifier for receipt by said message server between a first and a second ring period;
said remote terminal receiving an indication from said message server; and
said remote terminal waiting for said common server to connect.

8. The method of retrieving messages according to Claim 7 wherein said indication comprises an acknowlegement signal.

9. The method of retrieving messages according to Claim 7 wherein said indication comprises a failure to receive an acknowlegement signal.

10. The method of retrieving messages according to Claim 5 wherein said remote terminal receives said at least one message from said common message server over an Internet Protocol network.

11. The method of retrieving messages according to Claim 10 wherein said Internet Protocol network comprises the Internet.

12. The method of retrieving messages according to Claim 5 further comprising
decoupling said portable medium from said remote terminal; wherein said portable medium includes at least one message stored thereon;
loading said portable medium into a portable computer; and
reviewing said at least one message.

13. The method of retrieving messages according to Claim 12 wherein said reviewing said messages comprises listening to at least one voice message.

14. The method of retrieving messages according to Claim 12 wherein said reviewing said messages comprises reading at least one electronic mail message.

15. The method of retrieving messages according to Claim 12 wherein said reviewing said messages comprises reading at least one facsimile.

16. The method of retrieving messages according to Claim 12 wherein said reviewing said messages comprises reading at least one voice mail message.

17. A method for enabling one or more messages stored on a common server to be retrieved by a terminal for storage on a portable medium, comprising:
said message server receiving an incoming call indicated by at least two rings separated by a silent period;
said message server receiving an account identifier during said silent period;
said message server detecting said account identifier and determining if at least one message is stored in an account identified by said account identifier; and
subsequent to said determination, said message server transmitting an acknowledgement tone for receipt by said terminal.

18. The method of enabling one or more messages to be retrieved according to Claim 17 further comprising:
said message server transmitting a stored message for receipt by said terminal.

19. The method of enabling one or more messages to be retrieved according to Claim 17 further comprising:
said message server disconnecting said incoming call without connecting to said incoming call.

20. The method of enabling one or more messages to be retrieved according to Claim 17 wherein said indication includes an acknowledgment tone which indicates that a number of messages stored does not meet a predetermined set of requirements.

21. The method of enabling one or more messages to be retrieved according to Claim 17 wherein said indication includes an acknowledgment tone which indicates that a number of messages stored meets a predetermined set of requirements.

22. The method of enabling one or more messages to be retrieved according to Claim 17 wherein said message server determining that at least one message is stored includes said message server determining that at least one message has been stored since a previous attempt to access said identified account.

23. A method of retrieving one or more messages from a common server and storing the one or more messages on a portable medium selectively coupleable to a terminal, comprising:
said terminal reading information from said portable medium;
subsequent to said reading, said terminal operating to contact said message server based upon said information;
said terminal transmitting an account identifier for receipt by said message server between two consecutive rings;
said terminal receiving an indication about a set of messages stored on said message server; and
said terminal ending said retrieving subsequent to receiving said indication.

24. The method of retrieving messages according to Claim 23 wherein:
said indication includes an acknowledgment tone which indicates that a number of messages stored meets a predetermined set of requirements; and
said terminal receives at least one message and stores said at least one message on said portable medium.

25. The method of retrieving messages according to Claim 23 wherein said indication includes an acknowledgment tone which indicates that a number of messages stored does not meet a predetermined set of requirements.

26. A terminal for retrieving one or more messages from a message server and storing the one or more messages onto a portable medium, comprising:
means for receiving said portable medium, reading information stored thereon and operating to attempt to contact said message server; and
processor means coupled to said receiving means operating to retrieve said one or more messages from said message server and store said one or messages on said portable medium.

27. A system for retrieving one or more messages from a message server and storing the one or more messages onto a portable medium, comprising:
the terminal according to Claim 25,
said processor means being configured to transmit an account identifier to said message server between consecutive rings; and
detection means coupled to said common server for detecting said account identifier, wherein said detection means is responsive to said detection of said account number for determining if any messages are stored in an account identified by said identifier.

28. The system for retrieving one or more messages onto a portable medium according to Claim 27 wherein if said detection means determines that no messages are stored in said account, said detection means being responsive to said determination by producing a signal to cause said terminal means to discontinue said attempt to contact said message server.

29. The system for retrieving one or more messages onto a portable medium according to Claim 27 wherein if said detection means determines that at least one message is stored in said account, said detection means being responsive to said determination by going off-hook.

30. A system for a terminal to retrieve one or more messages from a message server
and store the one or more retrieved messages onto a portable medium, comprising:
a terminal selectively coupleable to the common message server;
a drive coupled to said terminal;
a modem coupled to said terminal;
wherein said portable medium is selectively loadable into said drive and contains information; and
a processor coupled to said terminal capable of reading said information from said portable medium and based upon said information, directing said terminal to connect to said common message server, retrieve at least one message therefrom and store said at least one retrieved message on said portable medium.

31. The system for retrieving one or more messages onto a portable medium according to Claim 30 further comprising:
a detector coupled to said message server, capable of detecting an account identification signal from said terminal prior to said message server going off-hook; and
another processor coupled to said detector and capable of determining if any messages are stored in an account identified by said identifier and capable of transmitting an acknowledgment tone back to said terminal.

32. The system for retrieving one or more messages onto a portable medium according to Claim 31 wherein said processor is configured to disconnect said terminal upon receipt of said acknowledgment tone.

33. The system for retrieving one or more messages onto a portable medium according to Claim 31 wherein said processor is configured to disconnect said terminal if it does not receive said acknowledgment tone within a predetermined period.

34. The system for retrieving one or more messages onto a portable medium according to Claim 30 wherein said terminal includes a plurality of drives.

35. A pay terminal comprising:
a telephone,
a pay mechanism coupled to said telephone; and
a drive, coupled to said telephone, selected from the group consisting of a disk drive and a wireless port.

36. The pay terminal according to Claim 35 wherein said drive is a disk drive.

37. The pay terminal according to Claim 35 wherein said drive is a wireless port.

38. The pay terminal according to Claim 37 wherein said wireless port is an IR port.

39. The pay terminal according to Claim 37 wherein said wireless port is an RF port.
